# EUROPÄISCHE PATENTSCHRIFT

(11) **EP 1 642 102 B1**
(45) Veröffentlichungstag und Bekanntmachung des Hinweises auf die Patenterteilung: **12.10.2011**
(21) Anmeldenummer: 04740243.3
(22) Anmeldetag: 24.06.2004
(51) Int. Cl.: G01K 15/00, G01J 5/04

(54) **ABGLEICHEN UND MESSEN VON TEMPERATUREN IN SCHMELZEN MITTELS OPTISCHER FASERN**
ALIGNING AND MEASURING TEMPERATURES IN MELTING BY MEANS OF OPTICAL FIBRES
ALIGNEMENT ET MESURE DE TEMPERATURES DANS DES MASSES EN FUSION AU MOYEN DE FIBRES OPTIQUES

(30) Priorität: 09.07.2003 DE 10331125
(43) Veröffentlichungstag der Anmeldung: 05.04.2006
(73) Patentinhaber: Heraeus Electro-Nite International N.V., 3530 Houthalen (BE)
(72) Erfinder: CUYPERS, Jan, B-1030 Brüssel (BE); STRAETEMANS, Marc, B-3941 Hechtel-Eksel (BE)
(74) Vertreter: Kühn, Hans-Christian
(86) Internationale Anmeldenummer: PCT/EP2004/006828
(87) Internationale Veröffentlichungsnummer: WO 2005/005946

(56) Entgegenhaltungen:
- DE-A- 2 758 084
- DE-A- 4 433 685
- US-B1- 6 227 702
- EWAN B C R: "A STUDY OF TWO OPTICAL FIBRE PROBE DESIGNS FOR USE IN HIGH-TEMPERATURE COMBUSTION GASES" MEASUREMENT SCIENCE AND TECHNOLOGY, IOP PUBLISHING, BRISTOL, GB, Bd. 9, Nr. 8, August 1998 (1998-08), Seiten 1330-1335, XP000848606 ISSN: 0957-0233

## Beschreibung

Die Erfindung betrifft ein Verfahren zum Abgleichen von Messsignalen, die mit optischen Fasern erhalten werden und zum Messen der Temperatur in Schmelzen mittels optischen Fasern sowie eine entsprechende Messvorrichtung. Des weiteren betrifft die Erfindung deren Verwendung. Dabei werden unter Schmelzen sowohl Schmelzen reiner Metalle wie Eisen, Kupfer oder Stahl oder Legierungen als auch Kryolithschmelzen, Salzschmelzen oder Glasschmelzen verstanden.

Derartige Vorrichtungen sind beispielsweise aus DE 199 34 299 A1 bekannt. Dabei wird ein Strahlungsdetektor zur Kalibrierung eines Meßsystems verwendet und ein zweiter Strahlungsdetektor zur Messung einer von einer Strahlungsquelle abgegebenen Strahlung. Aus Ewan B C R "A study ot two optical tibre probe designs for use in high-temperatute combustion gases", Measurement Science and Technology, IOP Publishing, Bristol, GB, vol.9 no. 8 August 1998, S. 1330ff sind ein ähnliches Abgleichverfahren und eine ähnliche Abgleichvorrichtung bekannt. In DE 2758084 A ist ein Thermoelementmessfühler zum Abgleichen von Messsignalen und zur Messung der Temperatur eines Schmelzbades offenbart.

Das Kalibrieren von Temperatursensoren ist beispielsweise aus GB 2 155 238 A und aus DE 195 32 077 A1 bekannt. Hier wird eine isoliert von einer Thermoelementspitze angeordnete Referenzmaße zur Kalibrierung benutzt. Dies ist notwendig, um eine einwandfreie Funktion des Thermoelements zu gewährleisten und seine Zerstörung zu verhindern. Derartige zerstörende Effekte sind beispielsweise in US 3 499 310 beschrieben. Hier ist ausdrücklich offenbart, dass das Thermoelement beispielsweise durch eine Beschichtung vor chemischen Reaktionen mit dem Referenzmaterial geschützt ist.

Andere Vorrichtungen sind beispielsweise in JP 63125906, US 4,576,486 und US 5,364,186 offenbart.

Aufgabe der vorliegenden Erfindung ist es, ein verbessertes Verfahren zum Angleichen von Messsignalen und eine entsprechende Vorrichtung zur Durchführung des Verfahrens bereitzustellen, die einfach und zuverlässig funktionieren.

Erfindungsgemäß wird die Aufgabe durch die Merkmale der unabhängigen Ansprüche gelöst. Wesentlich ist es für das Verfahren, dass ein Referenzmaterial mit einer bekannten Referenztemperatur an einem Ende einer optischen Faser angeordnet wird, dass das Referenzmaterial bis mindestens auf seine Referenztemperatur erwärmt wird, dass das von der Faser bei Erreichen der Referenztemperatur aufgenommene Signal als Abgleichsignal einem Messgerät zugeführt und dort mit dem theoretiechen Wert für die Reforanztemperstur verglichen und die Differenz zum Abgleichen verwendet wird. Insbesondere soll das Ende der optischen Faser mit dem Referenzmaterial in eine Metallschmelze, beispielsweise eine Eisen- oder Stahlschmelze eingetaucht und dort erwärmt werden. Dies Signalaufnahme erfolgt in prinzipiell bekannter Weise, wobei insbesondere das Kalibriersignal als Wert einer elektrischen Spannung in einen Temperaturwert umgerechnet wird und danach mit dem theoretischen Wert für die Referenztemperatur verglichen wird. Das Referenzmaterial ist dabei unmittelbar an dem Ende der optischen Faser angeordnet, das heißt, ohne die nach dem Stand der Technik notwendigen Isolationsanordnungen zwischen der Faser und dem Referenzmaterial.

Das erfindunqsqemäße Temperaturmessverfahren besteht weiterhin darin, dass nach oder bei einem erfindungsgemäßen Abgleichvorgang die optische Faser in die Schmelze getaucht und das erhaltene optische Signal als Wert der Temperatur der Schmelze ausgewertet wird. Durch die zeitliche Nähe zum Abgleich ist eine hohe Genauigkeit der Messung der Temperatur möglich. Vor jeder Temperaturmessung ist ein Abgleich möglich ohne zusätzlichen Aufwand. Insbesondere ist die Referenztemperatur des Referenzmaterials kleiner ist als die Schmelztemperatur der Schmelze. Wesentlich ist es weiterhin, dass das Referenzmaterial in die zu messende Schmelze getaucht und dort zweckmäßigerweise bis zur Referenztemperatur des Referenzmaterials erwärmt wird und dass danach die Temperatur der Schmelze gemessen wird.

Vorteilhaft ist es, dass als optische Faser Quarzglas und/oder Saphir benutzt wird, da dadurch eine Messung in Schmelzen bei hohen Temperaturen erfolgen kann. Des weiteren ist es zweckmaßig, dass als optische Faser eine Kombination einer Kunststofffaser und/oder einer Quarzglasfaser mit Saphir benutzt wird. Auch die Kombination einer Kunststofffaser mit Quarzglas ist es möglich.

Um eine Unterkühlung der Schmelze z. B. beim Abkühlen zu vermeiden, kann das Ende der Faser, das mit dem Referenzmaterial Kontakt hat, in Vibration versetzt werden. Die Vibration erfolgt zumindest zeitweise, zweckmäßig beim Abkühlen der Schmelze.

Das erfindungsgemäße Verfahren kann zum Kalibrieren oder zum Bestimmen der Dämpfung der optischen Faser verwendet werden.

Die Referenztemperatur kann die Schmelztemperatur eines reinen Metalls sein, falls als Referenzmaterial ein solches verwendet wird. Bei Verwendung von Legierungen als Referenzmaterial kann als Referenztemperatur die Liquidustemperatur, die Solidustemperatur oder der eutektische Punkt beispielsweise verwendet werden. Nach dem Planckschen Gesetz ist möglich, Kalibrierkurven über mehr als 500 °C zu extrapolieren. Beispielsweise kann also die Kalibration mit Silber als Referenzmaterial bei einer Temperatur von 961,8 °C erfolgen, wobei hohe Genauigkeiten selbst bei Messungen in Eisenschmelzen bei etwa 1.550 °C erreichbar sind.

Erfindungsgemäß weist die Vorrichtung zum Abgleichen von Messsignalen eine optische Faser, einen Träger für die Faser und ein mit der optischen Faser verbundenes Messgerät zur Aufnahme eines von der optischen Faser abgegebenen Signals auf und ist dadurch gekennzeichnet, dass ein Referenzmaterial mit einer bekannten Referenztemperatur an einem Ende der optischen Faser (unmittelbar) angeordnet ist und dass das Messgerät einen Komparator aufweist für das von der Faser bei Referenztemperatur des Referenzmaterials aufgenommene und dem Messgerät als Abgleichsignal zugeführte Signal und für ein dem theoretischen Wert für die Referenztemperatur entsprechendes Signal und das eine Auswerteeinheit zur Ausgabe und/oder Verarbeitung der Differenz zum Abgleichen vorgesehen ist. Durch die direkte Anordnung des Referenzmaterials am Ende der optischen Faser ist eine hohe Genauigkeit der Messung bei einfachem Aufbau erzielbar.

Die Aufgabe wird für die Vorrichtung zum Messen einer Temperatur in Schmelzen mit optischen Fasern weiterhin dadurch gelöst, dass die erfindungsgemäße Abgleichvorrichtung ein Eintauchende zum Eintauchen der optischen Faser in die Schmelze und eine Auswerteeinheit zur Auswertung des erhaltenen optischen und/oder elektrischen Signals als Wert für die Temperatur aufweist.

Für die Vorrichtungen ist es zweckmäßig, dass das Referenzmaterial das Ende der optischen Faser zumindest an deren Stimseite mindestens teilweise bedeckt und/oder dass das Referenzmaterial längs des Endes der optischen Faser angeordnet ist, da dadurch eine optimale Signalaufnahme ermöglicht wird. Zweckmäßig ist es weiterhin, dass das Ende der optischen Faser zumindest teilweise eine freie Oberfläche zur Aufnahme von Strahlung aufweist, Insbesondere ist es vorteilhaft, dass das Referenzmaterial als kompakte Masse, als Draht, als Drahtgitter oder als Rohr ausgebildet ist und dass die optische Faser aus Quarzglas und/oder Saphir gebildet ist. Des weiteren kann es verteilhaft sein, dass die optische Faser eine Kombination einer Kunststofffaser und/oder einer Quarzglasfaser mit Saphir aufweist. Auch die Kombination einer Kunststofffaser mit Quarzglas ist möglich.

Zur Vermeidung von Unterkühlung der Schmelze ist an der optischen Faser oder deren Träger oder der Faserführung ein Vibrator vorgesehen, mit dem die Faser, insbesondere deren mit dem Referenzmaterial kontaktiertes Ende vibriert werden kann.

Erfindungsgemäß wird die Vorrichtung zum Kalibrieren oder zum Bestimmen der Dämpfung (also der Leitungsverluste) einer optischen Faser verwendet. Der Begriff Abgleichen bedeutet in diesem Fall Kalibrieren oder Bestimmen der Dämpfung.

Nachfolgend wird die Erfindung an Hand eines Ausführungsbeispiels näher erläutert.

Dabei zeigt:
- Fig. 1: die schematische Darstellung einer Messanordnung,
- Fig. 2: einen detaillierten Querschnitt durch die optische Faser,
- Fig. 3: einen Querschnitt durch das Einlauchende der erfindungsgemäßen Mess- bzw. Abgleichvorrichtung und
- Fig. 4: eine Messkurve.

Eine optische Faser 1 ist mit einem Ende mit einem Messgerät 2 verbunden. Der Träger kann aus Pappe oder aus einem anderen Material wie Stahl oder Keramik bestehen. Das Messgerät 2 erfasst die von der optischen Faser 1 hinzugeleiteten Signale und ist in der Lage, ein Signal mit einem theoretischen Referenzwert zu vergleichen. Auf diese Weise wird ein von einem Referenzmaterial 3, welches an dem anderen Ende der optischen Faser 1 angeordnet ist, erzeugt wird, mit einem in dem Messgerät 2 gespeicherten theoretischen Referenzwert, beispielsweise der Referenztemperatur, verglichen. Eine eventuell vorhandene Differenz zwischen den beiden Werten wird zur Kalibrierung des Messgerätes benutzt. Das Messgerät 2 enthält mithin eine Auswerteeinheit zur Ausgabe und/oder Verarbeitung der Daten. Für den Fall, dass als Referenzmaterial 3 ein reines Metall, beispielsweise Silber, verwendet wird, dient als Referenztemperatur die Schmelztemperatur des Metalls, z.B. des Silber mit 961,8°C.

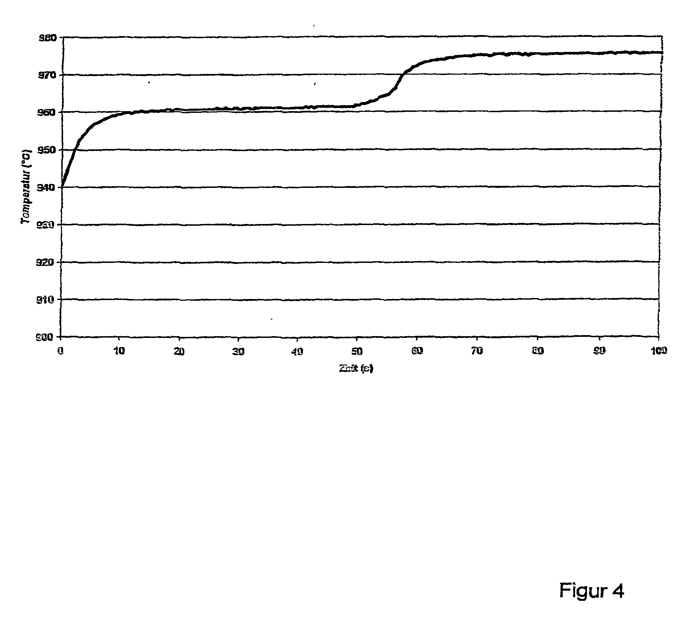

Die optische Faser 1 wird von einem Träger 4 gehalten und durch diesen hindurch geleitet. Zur freien Beweglichkeit der optischen Faser 1 ist diese in einer Schleife 5 dem Messgerät 2 zugeführt. Das an einem Ende der optischen Faser 1 angeordnete Referenzmaterial 3 wird in eine Metallschmelze 6 (beispielsweise innerhalb eines Schmelzofens) eingetaucht. Die Metallschmelze 6 ist beispielsweise eine Eisen oder Stahlschmelze, das Referenzmaterial 3 ist in diesem Fall beispielsweise Silber. Die Referenztemperatur ist die Schmelztemperatur des Silber, sie ist kleiner als die Schmelztemperatur der Eisen- oder Stahlschmelze. Das Ende der optischen Faser 1 mit dem Referenzmaterial 3 wird mit Hilfe des Trägers 4 in die Metallschmelze 6 eingetaucht. Dort erwärmt sich das Referenzmaterial 3 zunächst auf seine Schmelztemperatur. Hierbei wird das durch die optische Faser 1 dem Messgerät 2 zugeleitete Signal mit dem entsprechenden theoretischen Signalwert verglichen und auf diese Weise das Messgerät 2 kalibriert. Nach dem Aufschmelzen des Referenzmaterials 3 erwärmt sich dieses weiter bis auf die aktuelle Schmelztemperatur der Metallschmelze 6. Das dabei von der optischen Faser 1 an das Messgerät 2 geleitete Signal wird ausgewertet, beispielsweise in ein elektrisches, einer Temperatur entsprechenden elektrischen Wert umgewandelt und im Messgerät 2 weiterverarbeitet. Das elektrische Signal kann in einen optisch angezeigten Temperaturwert umgewandelt werden. Auf diese Weise wird zunächst das Messgerät 2 kalibriert und danach wird die aktuelle Temperatur der Metallschmelze 6 gemessen. In Fig. 4 ist der Temperaturverlauf während dieser aufeinander folgenden Verfahrensschritte gekennzeichnet. Dabei gibt der zunächst gewonnene Plateauwert die Schmelztemperatur des Referenzmaterials 3 (Silber) wieder und der folgende Plateauwert die Temperatur der Metallschmelze 6. An dem Träger 4 ist eine in der Figur nicht dargestellte Vibrationseinrichtung starr angeordnet. Derartige Vibrationseinrichtungen sind zum Beispiel aus DE 44 33 685 A1 bekannt.

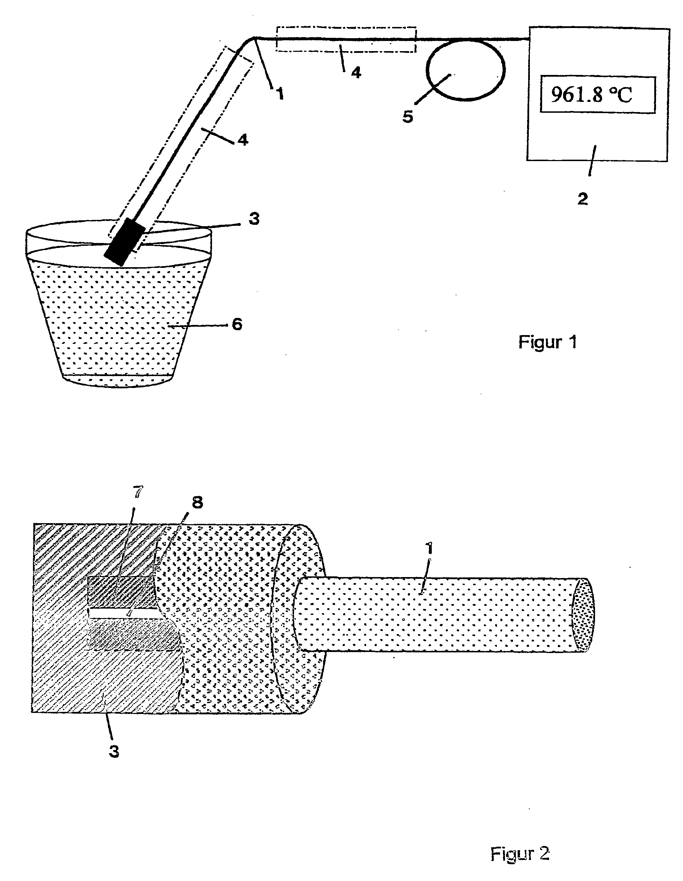

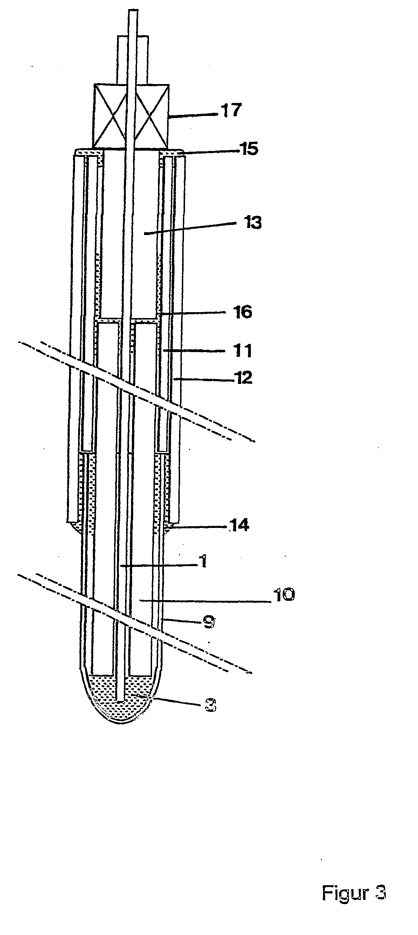

Figur 2 zeigt einen Querschnitt durch das zum Eintauchen in eine Metallschmelze bestimmte Ende der optischen Faser 1. Die optische Faser 1 weist eine Hülle (Cladding) 7 und einen Kern 8 auf. An ihrem Ende ist die optische Faser 1 von dem Referenzmaterial 3 sowohl seitlich als auch stirnseitig umgeben. Das Referenzmaterial 3 ist in den Fachmann geläufiger Weise gehaltert. Die Halterung erfolgt beispielsweise in der in Fig. 3 dargestellten Weise innerhalb eines einseitig geschlossenen Quarzrohres 9, welches das Eintauchende der optischen Faser 1 mit dem Referenzmaterial 3 umgibt. Die optische Faser 1 ist dabei durch ein Keramikrohr 10, beispielweise Alsint, geführt. Das Keramikrohr 10 ist mittels Zement, beispielsweise LiSiO₂ Zement 14 in zwei konzentrisch angeordneten weiteren Keramikrohren 11; 12 fixiert. Diese Keramikrohre können ebenfalls aus Alsint gebildet sein. Die Keramikrohre 10; 11; 12 sind an einem Kontaktblock 13 fixiert, durch den hindurch die optische Faser 1 geführt ist. Der Kontaktblock 13 ist mit dem Trägerrohr 4 verbunden (in Fig. 3 nicht dargestellt). Dabei ist das Keramikrohr 12 in dem offenen Ende des Trägerrohres 4 beispielsweise mittels Zement fixiert. Die Öffnungen am Ende des Keramikrohres 12 sind mit Zement 14; 15 verschlossen. Innerhalb des Keramikrohrs 11 kann zur Fixierung der darin befindlichen Elemente ebenfalls Zement 16 eingesetzt werden. Der Kontaktblock 13 mit seinem Anschlußteil 17 dient unter anderem auch als optische Verbindung.

## Patentansprüche

1. Verfahren zum Abgleichen von Meßsignalen, die mit optischen Fasern erhalten werden und zum Messen einer Temperatur in Schmelzen mittels optischer Fasern (1), wobei ein Referenzmaterial (3) mit einer bekannten Referenztemperatur, die kleiner ist als die Schmelztemperatur der Schmelze (6), unmittelbar an einem Ende einer optischen Faser (1) angeordnet wird, wobei das Referenzmaterial (3) in die zu messende Schmelze (6) getaucht und dort bis mindestens auf seine Referenztemperatur erwärmt wird, wobei das von der Faser (1) bei Erreichen der Referenztemperatur aufgenommene Signal als Abgleichsignal einem Meßgerät (2) zugeführt und dort mit dem theoretischen Wert für die Referenztemperatur verglichen und die Differenz zum Abgleichen verwendet wird, wobei die optischen Faser (1) in die Schmelze (6) getaucht und das erhaltene optische Signal als Wert der Temperatur der Schmelze (6) ausgewertet wird.

2. Verfahren nach Anspruch 1, **dadurch gekennzeichnet, dass** das Abgleichsignal als Wert einer elektrischen Spannung in einen Temperaturwert umgerechnet und danach mit dem theoretischen Wert für die Referenztemperatur verglichen wird.

3. Verfahren nach Anspruch 1 oder 2, **dadurch gekennzeichnet, dass** als optische Faser (1) Quarzglas oder Saphir benutzt wird.

4. Verfahren nach Anspruch 1 oder 2, **dadurch gekennzeichnet, dass** als optische Faser (1) eine Kombination einer Kunststofffaser und/oder einer Quarzglasfaser mit Saphir benutzt wird.

5. Verfahren nach einem der Ansprüche 1 bis 4, **dadurch gekennzeichnet, dass** das Ende der optischen Faser zumindest zeitweise in Vibration versetzt wird.

6. Verfahren nach einem der Ansprüche 1 bis 5, **dadurch gekennzeichnet, dass** es zum Kalibrieren oder zum Bestimmen der Dämpfung einer optischen Faser verwendet wird.

7. Vorrichtung zum Abgleichen von Meßsignalen und zum Messen einer Temperatur in Schmelzen mittels optischer Fasern, mit einer optischen Faser, mit einem Träger für die Faser und einem mit der optischen Faser verbundenen Messgerät zur Aufnahme eines von der optischen Faser abgegebenen Signals, wobei ein Referenzmaterial (3) mit einer bekannten Referenztemperatur unmittelbar an einem Ende der optischen Faser (1) angeordnet ist und wobei das Messgerät (2) einen Komperator aufweist für das von der Faser (1) bei Referenztemperatur des Referenzmaterials (3) aufgenommene und dem Messgerät (2) als Abgleichsignal zugeführte Signal und für ein dem theoretischen Wert für die Referenztemperatur entsprechendes Signal, wobei eine Auswerteeinheit zur Ausgabe und/oder Verarbeitung der Differenz zum Abgleichen vorgesehen ist und wobei die Vorrichtung ein Eintauchende zum Eintauchen der optischen Faser (1) in die Schmelze (6) und eine Auswerteeinheit zur Auswertung des erhaltenen optischen und/oder elektrischen Signals als Wert für die Temperatur aufweist.

8. Vorrichtung nach Anspruch 7, **dadurch gekennzeichnet, dass** das Referenzmaterial (3) das Ende der optischen Faser (1) zumindest an deren Stirnseite mindestens teilweise bedeckt und/oder dass das Referenzmaterial (3) längs des Endes der optischen Faser (1) angeordnet ist.

9. Vorrichtung nach Anspruch 7 oder 8, **dadurch gekennzeichnet, dass** das Ende der optischen Faser (1) zumindest teilweise eine freie Oberfläche aufweist.

10. Vorrichtung nach einem der Ansprüche 7 bis 9, **dadurch gekennzeichnet, dass** das Referenzmaterial (3) als kompakte Masse, als Draht, als Drahtgitter oder als Rohr ausgebildet ist.

11. Vorrichtung nacheinem der Ansprüche 7 bis 10, **dadurch gekennzeichnet, dass** die optische Faser (1) aus Quarzglas oder Saphir gebildet ist.

12. Vorrichtung nach einem der Ansprüche 7 bis 10, **dadurch gekennzeichnet, dass** die optische Faser (1) eine Kombination einer Kunststofffaser und/oder einer Quarzglasfaser mit Saphir aufweist.

13. Vorrichtung nach einem der Ansprüche 7 bis 12, **dadurch gekennzeichnet, dass** die optische Faser mit einem Vibrator verbunden ist.

14. Verwendung der Vorrichtung nach einem der Ansprüche 7 bis 13 zum Kalibrieren oder zum Bestimmen der Dämpfung einer optischen Faser.

## Claims

1. A method for calibrating measurement signals which are obtained by means of optical fibres and for measuring a temperature in molten masses by means of optical fibres (1), wherein a reference material (3) with a known reference temperature which is lower than the melting temperature of the molten mass (6) is arranged immediately at an end of the optical fibre (1), wherein the reference material (3) is immersed into the molten mass (6) to be measured and is heated there at least up to its reference temperature, wherein the signal received by the fibre (1) when the reference temperature is reached is supplied to a measuring instrument (2) as a calibration signal and is compared there with the theoretical value for the reference temperature and the difference is used for calibration, wherein the optical fibre (1) is immersed into the molten mass (6) and the obtained optical signal is evaluated as the value of the temperature of the molten mass (6).

2. The method according to Claim 1, **characterised in that** the calibration signal, being a value of an electrical voltage, is converted into a temperature value and is, subsequently, compared with the theoretical value for the reference temperature.

3. The method according to Claim 1 or 2, **characterised in that** fused quartz glass or sapphire is used as optical fibre (1).

4. The method according to Claim 1 or 2, **characterised in that** a combination of a plastic fibre and/or a fused quartz glass fibre and sapphire is used as optical fibre (1).

5. The method according to any one of Claims 1 to 4, **characterised in that** the end of the optical fibre is put into vibration at least temporarily.

6. The method according to any one of Claims 1 to 5, **characterised in that** it is used for calibrating or for determining the attenuation of an optical fibre.

7. A device for calibrating measurement signals or for measuring a temperature in molten masses by means of optical fibres, comprising an optical fibre, comprising a carrier for the fibre and a measuring instrument that is connected to the optical fibre and is intended for receiving a signal emitted by the optical fibre, wherein a reference material (3) with a known reference temperature is arranged immediately at an end of the optical fibre (1) and wherein the measuring instrument (2) comprises a comparator for the signal that is received by the fibre (1) at the reference temperature of the reference material (3) and supplied to the measuring device (2) as a calibration signal and for a signal that corresponds to the theoretical value for the reference temperature, wherein an evaluation unit is provided for outputting and/or processing the difference for calibration and wherein the device comprises an immersion end for immersing the optical fibre (1) into the molten mass (6) and an evaluation unit for evaluating the obtained optical and/or electrical signal as the value for the temperature.

8. The device according to Claim 7, **characterised in that** the reference material (3) covers the end of the optical fibre (1) at least at the front side thereof at least in parts and/or that the reference material (3) is arranged along the end of the optical fibre (1).

9. The device according to Claim 7 or 8, **characterised in that** the end of the optical fibre (1) comprises a free surface at least in part.

10. The device according to any one of Claims 7 to 9, **characterised in that** the reference material (3) is configured as a compact mass, as a wire, as a wire grating, or as a tube.

11. The device according to any one of Claims 7 to 10, **characterised in that** the optical fibre (1) is formed from fused quartz glass or sapphire.

12. The device according to any one of Claims 7 to 10, **characterised in that** the optical fibre (1) comprises a combination of a plastic fibre and/or a fused quartz glass fibre and sapphire.

13. The device according to any one of Claims 7 to 12, **characterised in that** the optical fibre is connected to a vibrator.

14. A use of the device according to any one of Claims 7 to 13 for calibrating or for determining the attenuation of an optical fibre.

## Revendications

1. Procédé d'équilibrage de signaux de mesure qui sont obtenus avec des fibres optiques et de mesure d'une température dans des masses fondues au moyen de fibres optiques (1), dans lequel un matériau de référence (3) avec une température de référence connue qui est inférieure à la température de fusion de la masse fondue (6) est disposé directement à une extrémité d'une fibre optique (1), dans lequel le matériau de référence (3) est immergé dans la masse fondue à mesurer (6) et y est chauffé jusqu'à au moins sa température de référence, dans lequel le signal capté par la fibre (1) lors de l'atteinte de la température de référence est amené en tant que signal d'équilibrage à un appareil de mesure (2) et y est comparé à la valeur théorique pour la température de référence et la différence est utilisée pour l'équilibrage, dans lequel la fibre optique (1) est immergée dans la masse fondue (6) et le signal optique obtenu est évalué en tant que valeur de la température de la masse fondue (6).

2. Procédé selon la revendication 1, **caractérisé en ce que** le signal d'équilibrage est converti en tant que valeur d'une tension électrique en une valeur de température et est ensuite comparé à la valeur théorique pour la température de référence.

3. Procédé selon la revendication 1 ou 2, **caractérisé en ce que** du verre de quartz ou du saphir est utilisé en tant que fibre optique (1).

4. Procédé selon la revendication 1 ou 2, **caractérisé en ce qu'**une combinaison d'une fibre synthétique et/ou d'une fibre en verre de quartz avec du saphir est utilisée en tant que fibre optique (1).

5. Procédé selon l'une quelconque des revendications 1 à 4, **caractérisé en ce que** l'extrémité de la fibre optique est amenée à vibrer au moins temporairement.

6. Procédé selon l'une quelconque des revendications 1 à 5, **caractérisé en ce qu'**il est utilisé pour l'étalonnage ou la détermination de l'amortissement d'une fibre optique.

7. Dispositif d'équilibrage de signaux de mesure et de mesure d'une température dans des masses fondues au moyen de fibres optiques, avec une fibre optique, avec un support pour la fibre et un appareil de mesure relié à la fibre optique pour capter un signal émis par la fibre optique, dans lequel un matériau de référence (3) avec une température de référence connue est disposé directement à une extrémité de la fibre optique (1) et dans lequel l'appareil de mesure (2) présente un comparateur pour le signal capté par la fibre (1) à la température de référence du matériau de référence (3) et amené à l'appareil de mesure (2) en tant que signal d'équilibrage et pour un signal correspondant à la valeur théorique pour la température de référence, dans lequel un module d'évaluation pour l'émission et/ou le traitement de la différence est prévu pour l'équilibrage et dans lequel le dispositif présente une extrémité d'immersion pour l'immersion de la fibre optique (1) dans la masse fondue (6) et un module d'évaluation pour évaluer le signal optique et/ou électrique obtenu en tant que valeur pour la température.

8. Dispositif selon la revendication 7, **caractérisé en ce que** le matériau de référence (3) recouvre au moins partiellement l'extrémité de la fibre optique (1) au moins sur son côté frontal et/ou que le matériau de référence (3) est disposé le long de l'extrémité de la fibre optique (1).

9. Dispositif selon la revendication 7 ou 8, **caractérisé en ce que** l'extrémité de la fibre optique (1) présente au moins partiellement une surface libre.

10. Dispositif selon l'une quelconque des revendications 7 à 9, **caractérisé en ce que** le matériau de référence (3) est réalisé en tant que masse compacte, en tant que fil métallique, en tant que grille en fils de fer ou en tant que tube.

11. Dispositif selon l'une quelconque des revendications 7 à 10, **caractérisé en ce que** la fibre optique (1) est formée de verre de quartz ou de saphir.

12. Dispositif selon l'une quelconque des revendications 7 à 10, **caractérisé en ce que** la fibre optique (1) présente une combinaison d'une fibre synthétique et/ou d'une fibre en verre de quartz avec du saphir.

13. Dispositif selon l'une quelconque des revendications 7 à 12, **caractérisé en ce que** la fibre optique est reliée à un vibrateur.

14. Utilisation du dispositif selon l'une quelconque des revendications 7 à 13 pour l'étalonnage ou la détermination de l'amortissement d'une fibre optique.
